# EUROPEAN PATENT APPLICATION

(11) **EP 2 551 851 A1**
(43) Date of publication of application: **30.01.2013**
(21) Application number: 11758942.4
(22) Date of filing: 28.02.2011
(51) Int. Cl.: G11B 7/085

(54) **OPTICAL DISC DEVICE**

(30) Priority: 25.03.2010 JP 2010069638
(71) Applicant: Panasonic Corporation, Kadoma-shi Osaka 571-8501 (JP)
(72) Inventor: WATANABE, Takamitsu, Osaka 540-6207 (JP); HOTTA, Naoya, Osaka 540-6207 (JP)
(74) Representative: Grünecker, Kinkeldey, Stockmair & Schwanhäusser
(86) International application number: PCT/JP2011/001139
(87) International publication number: WO 2011/118130

(57) **Abstract**

An optical disk apparatus according to the present invention includes: a drive selector 28 that makes a switch between a setting for sending a drive signal generated by a focus drive generation section 25 to a focus drive section 29, and a setting for sending a drive signal generated by a focus filter 27 to the focus drive section 29; and a lock-in timing detection section 21 that, upon a light amount signal detected by a light amount signal detection section exceeding a predetermined light amount level, determines that an optical spot reaches a vicinity of any of recording layers, and sends to the drive selector 28 a focus lock-in timing instruction for switching to the setting for sending the drive signal generated by the focus filter 27 to the focus drive section 29. Such configuration provides an optical disk apparatus allowing a stable focus lock in operation to be performed without using a layer determination signal when locking a focus into a recording layer of an optical disk.

## Description

### [Technical Field]

The present invention relates to focus lock-in for an optical disk including one or more recording layers, and specifically relates to an optical disk apparatus not using a layer determination signal.

### [Background Art]

In recent years, optical disks such as CDs (Compact Discs) and DVDs (Digital Versatile Discs) are widely used. Lamely, optical disks have become increasingly denser in order to accept high-definition images, and high-capacity optical disks called BDs (Blu-ray Discs) have been put into practical use. In order to achieve such high capacity, techniques such as those described below have been developed for optical disk apparatuses: the wavelength of a laser used for recording/reproducing information in an optical disk recording layer is shortened; an objective lens is made to have an increased NA (numerical aperture) and an optical spot focused on an optical disk recording layer has a reduced size; and one or more optical disk recording layers are provided.

Here, in an optical disk apparatus, a focus lock-in operation in which an objective lens is driven in a direction perpendicular to an optical disk recording layer (focus direction) to detect the light collection status of an optical spot and the position of the objective lens is determined according to the light collection status is performed. However, in an optical disk apparatus that performs recording/reproduction on a high-capacity BD such as described above, the distance between a surface of an optical disk and an objective lens (operating distance) is short because of the increased NA of the objective lens. Accordingly, the surface of the optical disk and the objective lens easily collide with each other because of, e.g., wobbling of the optical disk, resulting in the surface of the optical disk getting a crack due to the collision.

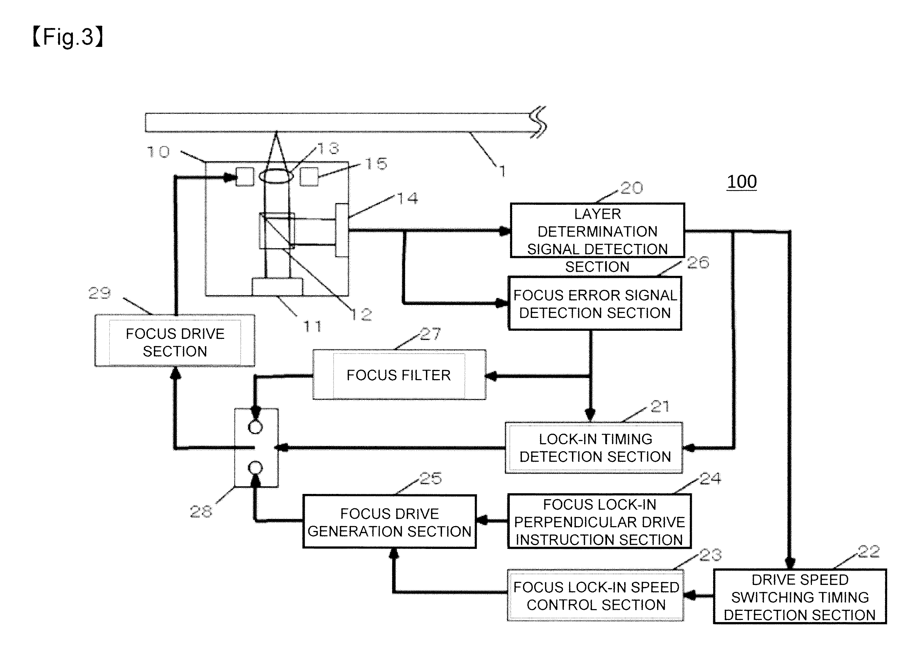

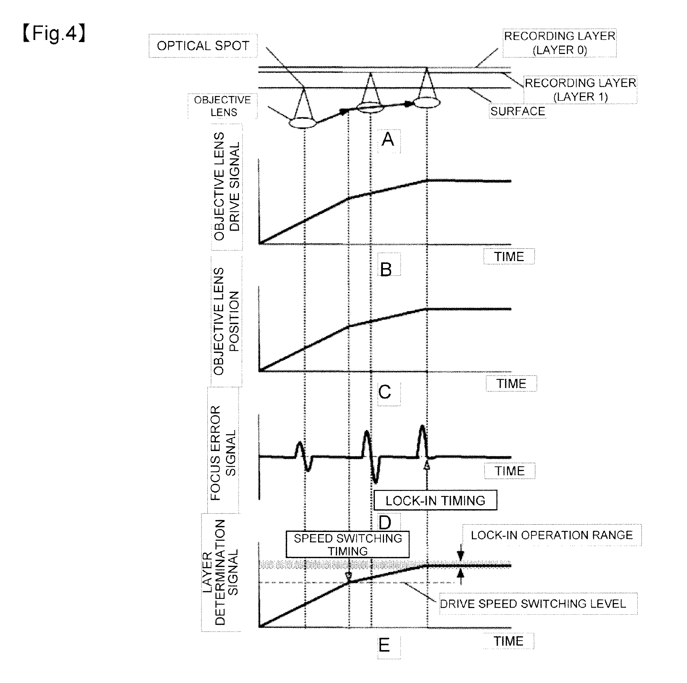

Accordingly, optical disk apparatuses for recording/reproduction on BDs are demanded to perform a precise and stable focus lock-in operation for an intended optical disk recording layer. In response to such demand, a focus lock-in method using a layer determination signal enabling determination of whether or not an optical spot of laser light is focused on an optical disk recording layer has been proposed (see, for example, Patent Literature 1). A configuration of a conventional optical disk apparatus and a conventional focus lock-in method will be described in details with reference to Figures 3 and 4.

Figure 3 is a block diagram illustrating a configuration of a conventional optical disk apparatus. In Figure 3, an optical pick-up 10 includes a laser 11, a beam splitter 12, an objective lens 13, an optical detection section 14 and a focus actuator 15.

The laser 11 applies laser light of a predetermined intensity toward an optical disk 1. The applied laser Light passes through the beam splitter 12 and is collected on a recording layer of the optical disk 1 by the objective lens 13. The laser light reflected by the optical disk 1 is reflected by the beam splitter 12 and applied to a plurality of photodetectors included in the optical detection section 14. In the optical detection section 14, the laser light is converted into electrical signals according to the received light amounts, predetermined output signals from the optical detection section 14 are respectively input to a layer determination signal detection section 20 and a focus error signal detection section 26.

The layer determination signal detection section 20 generates a layer determination signal from the output signals from the optical detection section 14. The layer determination signal is used for determining on which recording layer the laser light is collected. Here, the difference between the respective recording layers in terms of output level when laser light is collected on the respective recording layers is utilized. The layer determination signal generated in the layer determination signal detection section 20 is sent to each of a lock-in timing detection section 21 and a drive speed switching timing detection section 22.

Upon the layer determination signal reaching a predetermined signal level, the drive speed switching timing detection section 22 determines that an optical spot resulting from collection of the laser light is present in the vicinity of an intended recording layer, and sends a speed switching instruction to a focus lock-in speed control section 23.

Upon the speed switching instruction being input, the focus lock-in speed control section 23 selects a low drive speed for performing focus lock-in, the low drive speed being set for each optical disk type, and inputs an instruction for the speed to a focus drive generation section 25.

A focus lock-in perpendicular drive instruction section. 24 sends an instruction for moving the objective lens 13 up/down to the focus drive generation section 25. The focus drive generation section 25 generates a drive signal according to the instructions from the focus lock-in perpendicular drive instruction section 24 and the focus lock-in speed control section 23, and sends the drive signal to a drive selector 28.

The drive selector 28 is ordinarily set to send the drive signal from the focus drive generation section 25 to a focus drive section 29, and the focus drive section 29 sends the drive signal to the focus actuator 15 according to the instruction from the focus drive generation section 25. The focus actuator 15 perpendicularly drives the objective lens 13 according to the drive signal from the focus drive section 29.

Furthermore, the focus error signal detection section 26 generates a focus error signal using the predetermined signals from the optical detection section 14. A focus error signal is a signal whose level varies depending on the status of collection of laser light on a recording layer of the optical disk 1 when an optical spot resulting from collection of the laser light is present in the vicinity of the recording layer or a surface of the optical disk 1. Also, when the optical spot resulting from collection of the laser light passes through the recording layer or the surface, an S-shaped signal waveform appears, and at a timing where the optical spot passes through the surface of the recording layer or the surface of the optical disk 1, the S-shaped signal waveform crosses a zero level (which is hereinafter referred to as "zero crossing in an S-shaped waveform of the focus error signal"). The focus error signal generated by the focus error signal detection section 26 is input to each of the lock-in timing detection section 21 and a focus filter 27.

The focus filter 27 is a control filter that generates a drive signal for performing focus control based on the focus error signal, and the drive signal is sent to the drive selector 28.

The drive selector 28, as described above, is ordinarily set to send the drive signal from the focus drive generation section 25 to the focus drive section 29; however, upon receipt of an instruction for a lock-in timing from the lock-in timing detection section 21, the setting is switched to a setting for sending the drive signal from the focus filter 27 to the focus drive section 29.

The layer determination signal from the layer determination signal detection section 20 and the focus error signal from the focus error signal detection section 26 are input to the lock-in timing detection section 21. Upon the layer determination signal from the layer determination signal detection section 20 falling within a predetermined level range, the lock-in timing detection section 21 determines that the optical spot resulting from collection of the laser light is focused in the vicinity of an intended recording layer. Then, the lock-in timing detection section 21 detects a timing where the focus error signal from the focus error signal detection section 26 falls on a zero crossing in an S-shaped waveform thereof, and sends a focus lock-in timing instruction to the drive selector 28.

Upon receipt of the focus lock-in timing instruction from the lock-in timing detector 21, the drive selector 28 switches its setting to the setting for sending the drive signal from the focus filter 27 to the focus drive section 29.

The focus drive section 29 sending the drive signal according to the instruction from the focus filter 27 to the focus actuator 15 causes the objective lens 13 to settle at a height position where the focus error signal falls on a zero crossing in an S-shaped waveform thereof, enabling the optical spot resulting from collection of the laser light to be focused on a position on a surface of the intended recording layer.

Next, a detailed description will be provided with reference to Figures 4A to 4E, taking an operation for locking a focus into a layer 0 (layer farthest from the surface of the optical disk 1) of a dual-layer BD as an example. The abscissa in Figures 4A to 4E indicates time on a same scale.

Figure 4A illustrates a positional relationship among the optical disk 1, the objective lens 13 and an optical spot resulting from the laser light being collected by the objective lens 13 in a focus lock-in operation. Figure 4B illustrates a drive signal provided from the focus drive section 29 to the focus actuator 15 in the focus lock-in operation. Figure 4C illustrates height position of the objective lens 13 in the focus lock-in. Figure 4D illustrates level of an output signal from the focus error signal detection section 26 in the focus lock-in operation. Figure 4E illustrates level of a layer determination signal output from the layer determination signal detection section 20 in the focus lock-in operation, drive speed switching level for the objective lens 13, and a lock-in operation range.

First, the optical disk apparatus performs processing for determining the type of an optical disk including determination of the medium type such as CD, DVD or BD and the number of recording layers in the optical disk (hereinafter referred to as optical disk determination processing). Upon completion of such determination, the objective lens 13 is perpendicularly raised from a position far from the optical disk 1 at a predetermined speed. As the objective lens 13 is raised, the distance between the optical spot resulting from collection of the laser light and the optical disk 1 varies, and accompanying the variation, the level of the layer determination signal from the layer determination signal detection section 20 varies. Upon the layer determination signal reaching a predetermined drive speed switching level, the speed of the rise of the objective lens 13 is switched to a predetermined low speed. Furthermore, when the objective lens 13 is raised at the low speed, resulting in the level of the layer determination signal from the layer determination signal detection section 20 falling within a predetermined lock-in operation range set for lock-in for the layer 0 of the dual-layer BD, it is determined that the optical spot resulting from collection of the laser light is focused in the vicinity of the layer 0, and detection of a zero-crossing in an S-shaped waveform of the focus error signal is performed. As a result of the objective lens 13 being caused to settle at a height position where the zero-crossing in the S-shaped waveform of the focus error signal has been detected, the optical spot resulting from collection of the laser light can be caused to settle at a position on the surface of the layer 0, and thereby the focus lock-in operation is completed.

### [Citation List]

### [Patent Literature]

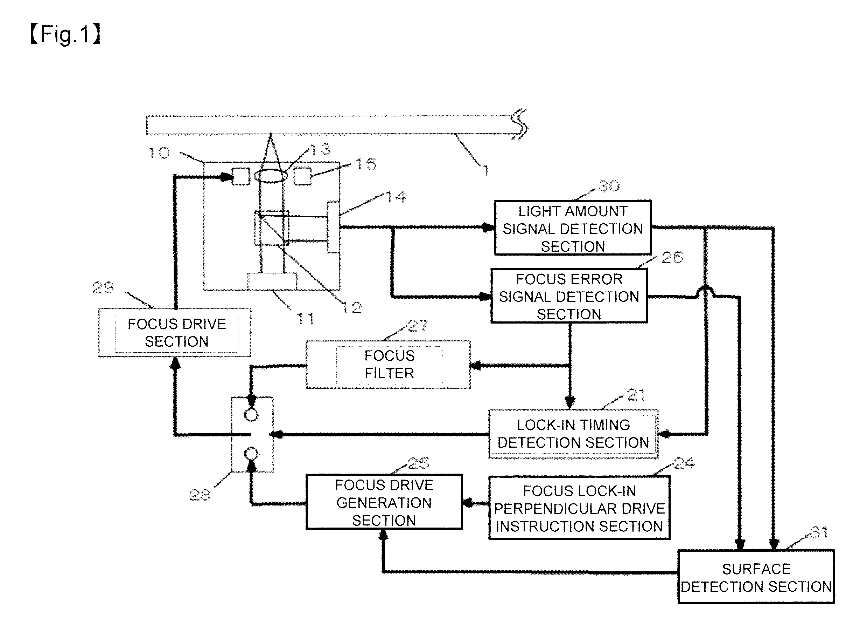

[Patent Literature 1]
   Japanese Patent Laid-Open No. 2007-26528 (pages 11-13, and Figures 3 and 4)
[Patent Literature 2]
   Japanese Patent Laid-Open No. 2008-310931 (pages 7 and 8, and Figure 1)

### [Summary of Invention]

### [Technical Problem]

However, in the conventional optical disk apparatus disclosed in patent literature 1, a focus lock-in position is detected based on a focus error signal and a layer determination signal from an optical pick-up, and thus, the optical pick-up needs to include an output terminal for the layer determination signal, separately from an output terminal for focus error signal detection, causing the problems of an increase in the number of terminals in the optical pick-up and complexity of wiring.

Meanwhile, patent literature 2 proposes that a common terminal for a focus error signal and a layer determination signal is provided to reduce the number of terminals. However, the optical disk apparatus disclosed in patent literature 2 still needs to include light-receiving elements separately from those for focus error signal generation and tracking error signal generation, in order to obtain a layer determination signal.

The present invention has been made in order to solve the forementioned problems, and an object of the present invention is to provide an optical disk apparatus allowing a stable focus lock-in operation to be performed without using a layer determination signal.

### [Solution to Problem]

In order to achieve the object, an optical disk apparatus according to the present invention includes: a drive selector that switches between a setting for sending a drive signal generated by a focus drive generation section to a focus drive section, and a setting for sending a drive signal generated by a focus filter to the focus drive section; and a lock-in timing detection section that, upon a light amount signal detected by a light amount signal detection section exceeding a predetermined light amount level, determines that an optical spot reaches a vicinity of any of recording layers, and sends to the drive selector a focus lock-in timing instruction for switching to the setting for sending the drive signal generated by the focus filter to the focus drive section.

### [Advantageous Effect of Invention]

According to the present invention, a surface of an optical disk and a position of a recording layer are detected using a light amount signal resulting from summation of reflected light from the optical disk, enabling provision of an optical disk apparatus allowing a stable focus lock-in operation to be performed without increasing in the number of terminals and the number of light-receiving elements in an optical pick-up.

### [Brief Description of Drawings]

[Figure 1] Figure 1 is a block diagram of an optical disk apparatus according to an embodiment of the present invention.

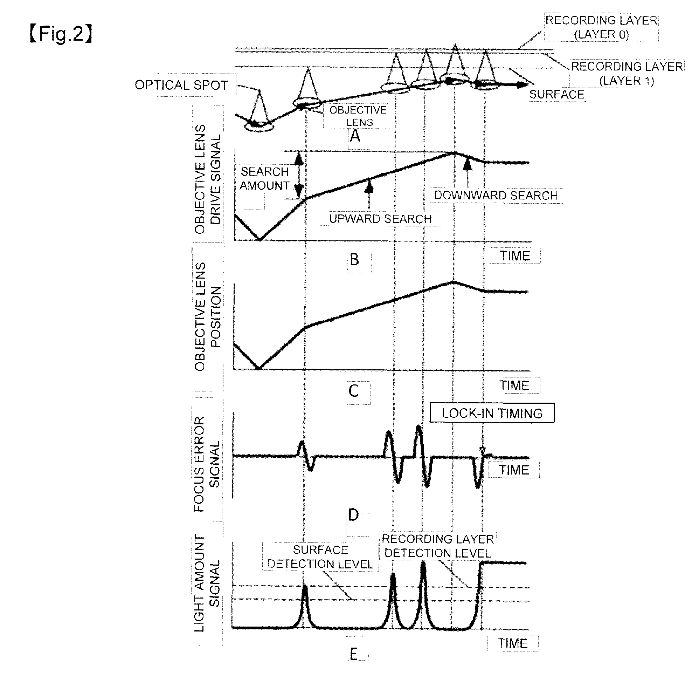

[Figure 2] Figure 2A is a diagram illustrating an example of a positional relationship among an objective lens, an optical spot of laser light, and an optical disk in focus lock-in according to an embodiment of the present invention; Figure 2B is a diagram illustrating an example of a waveform of an objective lens drive signal in focus lock-in according to an embodiment of the present invention; Figure 2C is a diagram illustrating an example of objective lens position in focus lock-in according to an embodiment of the present invention; Figure 2D is a diagram illustrating an example of a waveform of a focus error signal in focus lock-in according to an embodiment of the present invention; and Figure 2E is a diagram illustrating an example of a waveform of a light amount signal in focus lock-in according to an embodiment of the present invention.
[Figure 3] Figure 3 is a block diagram of an optical disk apparatus according to conventional art.
[Figure 4] Figure 4A is a diagram illustrating an example of a positional relationship among an objective lens, an optical spot of laser light, and an optical disk in focus lock-in according to conventional art; Figure 4B is a diagram illustrating an example of a waveform of an objective lens drive signal in focus lock-in according to conventional art; Figure 4C is a diagram illustrating an example of objective lens position in focus lock-in according to conventional art; Figure 4D is a diagram illustrating an example of a waveform of a focus error signal in focus lock-in according to conventional art;
and Figure 4E is a diagram illustrating an example of a waveform of a layer determination signal in focus lock-in according to conventional art.

### [Description of Embodiments]

Hereinafter, an embodiment of the present invention will be described with reference to the drawings.

First, a configuration of an optical disk apparatus 100 according to an embodiment of the present invention will be described with reference to Figure 1. Figure 1 is a block diagram of the optical disk apparatus 100. Component that are the same as those of the conventional optical disk apparatus described with reference to Figure 3, from among the components illustrated in Figure 1, are provided with reference numerals that are the same as those in Figure 3.

In Figure 1, an optical disk 1, an optical pick-up 10, a laser 11, a beam splitter 12, an objective lens 13, an optical detection section 14, a focus actuator 15, a lock-in timing detection section 21, a focus lock-in perpendicular drive instruction section 24, a focus drive generation section 25, a focus error signal detection section 26, a focus filter 27, a drive selector 28 and a focus drive section 29 are the same as those in the conventional art, and thus, a detailed description thereof will be omitted.

The embodiment of the present invention is different from the conventional art in including a light amount signal detection section 30 and a surface detection section 31 instead of the layer determination signal detection means 20 and the drive speed switching timing detection section 22 in Figure 3, which illustrates the conventional art. An input to the light amount signal detection section 30 is an output signal from the optical detection section 14, which is used for generation of an RF signal, the RF signal being a signal for information on a recording layer of the optical disk 1, and a tracking error signal. For an output from the optical detection section 14, an existing output terminal is used.

A surface of the optical disk 1 and a position of a recording layer are detected with the below-described method, using the light amount signal detection section 30 and the surface detection section 31, enabling a stable focus lock-in operation to be performed without using a layer determination signal and without increasing the number of output terminals in the optical pick-up. Details of functions of the light amount signal detection section 30 and the surface detection section 31 will be described below.

The light amount signal detection section 30 converts light received by the optical detection section 14 into electrical signals according to the light amounts, and generates a light amount signal, which is a sum of the signals. In the embodiment of the present invention, four photodetectors used for, e.g., generation of an RF signal for information on a recording layer of the optical disk 1, and a tracking error signal for tracking a row of pits present in a recording layer of the optical disk 1. They are not new components provided for the light amount signal detection section 30, but are components necessary for other functions.

The surface detection section 31 uses the light amount signal from the light amount signal detection section 30 and a focus error signal detected by the focus error signal detection section 26. Upon the light amount signal reaching a predetermined signal level for the first time in the middle of rise of the objective lens 13, the surface detection section 31 determines that an optical spot resulting from collection of laser light is present in the vicinity of a surface of the optical disk 1. Then, the surface detection section 31 detects a zero-crossing in an S-shaped waveform of the focus error signal for that vicinity to detect a position of the surface of the optical disk 1. The surface detection section 31 conveys information on the detection to the focus drive generation section 25.

Next, a procedure for moving the objective lens 13 up/down in order to search for a position of a recording layer of the optical disk 1 will be described.

A focus drive amount of up/down movement of the objective lens 13 for searching for a position of a recording layer in the optical disk 1 (hereinafter referred to as "search amount") is determined in advance depending on the type of the optical disk 1. The search amount is a fixed value designed for each type of the optical disk 1 so as to search for the recording layer in a range in which the optical disk 1 and the objective lens 13 do not collide with each other, in consideration of wobbling of the optical disk 1, an error in height of the objective lens 13 due to variation in assembly, variation in drive sensitivity of the focus actuator 15 (ratio of a movement amount of the objective lens 13 relative to a drive signal input to the focus actuator 15).

A drive signal generated by the focus drive generation section 25 is input to the focus drive section 29 via the drive selector 28. The focus drive section 29 starts search for a position of a recording layer upward from the current position in the predetermined search amount (hereinafter referred to as "upward search") according to the drive signal. Upon completion of the upward search, the search is further turned downward from the current position to perform a search for a position of a recording layer downward in a predetermined search amount as in the upward search (hereinafter referred to as "downward search").

Here, in the conventional art, upon the layer determination signal from the layer determination signal detection section 20 falls within a predetermined level range, the lock-in timing detection section 21 determines that an optical spot resulting from collection of laser light is focused in the vicinity of an intended recording layer. Then, the lock-in timing detection section 21 detects a timing where the focus error signal from the focus error signal detection section 26 falls on a zero-crossing in an S-shaped waveform thereof, and sends an instruction for a focus lock-in timing to the drive selector 28.

Meanwhile, in the embodiment of the present invention, during a downward search, when the light amount signal from the light amount signal detection section 30 reaches a predetermined signal level, the lock-in timing detection section 21 determines that a recording layer of the optical disk 1 is detected as in the case where the surface detection section 31 detects the surface of the optical disk 1. Then, the lock-in timing detection section 21 counts the number of detections. Furthermore, a further downward search is performed and when the number of detections corresponds to the order in which an intended recording layer that is a target of focus lock-in is arranged, the lock-in timing detection section 21 determines that the optical spot resulting from collection of the laser light is present in the vicinity of the intended recording layer. The lock-in timing detection section 21 detects a zero-crossing in an S-shaped waveform of the focus error signal for that vicinity to detect the position of the recording layer. Upon detecting the position of the intended recording layer, the lock-in timing detection section 21 sends a focus lock-in timing instruction to the drive selector 28.

Upon receipt of the focus lock-in timing instruction from the lock-in timing detection section 21, the drive selector 28 switches its setting to a setting for sending a drive signal for causing the objective lens 13 to settle at a height position where the focus error signal falls on a zero-crossing in an S-shaped waveform thereof from the focus filter 27 to the focus drive section 29. Then, the focus drive section 29 drives the focus actuator 15 according to the drive signal from the focus filter 27. Consequently, the objective lens 13 is caused to settle at a height position where the focus error signal falls on a zero-crossing in an S-shaped waveform thereof, enabling the optical spot resulting from collection of the laser light to be caused to settle at a position on the surface of the intended recording layer.

As described above, the position of the surface of the optical disk 1 is detected based on the amount of reflected light from the surface of the optical disk 1, and positions of recording layers are searched for in a fixed movement amount provided in consideration of the amount of wobbling of the optical disk 1, variation in height of the objective lens, and variation in drive sensitivity of the focus actuator from the position of the surface thereof to detect a position of an intended recording layer. Then, an optical spot resulting from collection of laser light is caused to settle at a position on a surface of the recording layer.

Consequently, a focus lock-in operation can be performed without using a layer determination signal while avoiding collision between the optical disk 1 and the objective lens 13. Thus, the problems of limitation of the number of terminals in the optical pick-up and the complexity of wiring in the conventional optical disk apparatus can be solved.

Next, a detailed description will be provided with reference to Figures 2A to 2E, taking an operation for locking a focus into a layer 0 (layer farthest from a surface of the optical disk 1) of a dual-layer BD as an example. The abscissa axes in Figures 2A to 2E indicate time on a same scale.

Figure 2A illustrates a positional relationship among the optical disk 1, the objective lens 13 and an optical spot resulting from laser light being collected by the objective lens 13 in a focus lock-in operation. Figure 2B illustrates a drive signal for the objective lens 13 from the focus drive section 29 in the focus lock-in. Figure 2C illustrates a height position of the objective lens 13 in the focus lock-in. Figure 2D illustrates level of an output signal from the focus error signal detector 26 in the focus lock-in. Figure 2E illustrates level of a light amount signal output from the light amount signal detection section 30, surface detection level and recording layer detection level in the focus lock-in.

First, upon completion of optical disk determination processing, the focus drive generation section 25 perpendicularly lowers the objective lens 13 to a predetermined position so that the optical spot resulting from collection of the laser light is positioned below a surface of the optical disk 1, and then raises the objective lens 13 from that position. The objective lens 13 is continuously driven to rise, and when the optical spot resulting from collection of the laser light is focused in the vicinity of the surface of the optical disk 1, the level of the light amount signal, which is an output of the light amount signal detection section 30, is raised.

Then, when the light amount signal reaches a predetermined surface detection level, the surface detection section 31 determines that the optical spot resulting from collection of the laser light is present in the vicinity of the surface of the optical disk 1. Furthermore, the surface detection section 31 detects a zero-crossing in an S-shaped waveform of the focus error signal, and determines that the position of the zero-crossing corresponds to the surface of the optical disk 1. The surface detection section 31 inputs information on the detection to the focus drive generation section 25.

Next, the focus drive generation section 25 performs an upward search with the objective lens 13 in a predetermined search amount from the current position. Upon completion of the upward search, a downward search is further performed downward from that position to start detection of the layer 0. A recording layer is detected according to a procedure that is the same as that in the surface detection is performed. In the case of detection of the layer 0, which is a recording layer farthest from the disk surface, the lock-in timing detection section 21 determines that the optical 1 spot is present in the vicinity of the layer 0 when the level of the light amount signal exceeds a predetermined recording layer detection level for the first time. Then, the lock-in timing detection section 21 sends a focus lock-in timing instruction to the drive selector 28.

Then, the drive selector 28 switches its setting to the setting for sending a drive signal for causing the objective lens 13 to settle at a height position where the focus error signal falls on a zero-crossing in an S-shaped waveform thereof from the focus filter 27 to the focus drive section 29. Accordingly, the optical spot resulting from collection of the laser light can be caused to settle at a position on the surface of the layer 0. It should be noted that focus lock-in is performed in a downward search so that the focus lock-in operation can be interrupted safely because the objective lens 13 is driven in a direction in which the objective lens 13 moves away from the optical disk 1, allowing avoidance of erroneous collision between the objective lens 13 and the optical disk 1 in the case of a lock-in failure.

As a result of a focus lock-in operation being performed according to the above-described procedure, a precise and stable focus lock-in operation in which a layer determination signal is not used and the optical disk 1 and the objective lens 13 do not collide with each other can be performed.

Although the embodiment of the present invention has been described in terms of a focus lock-in operation for a BD as an example, the embodiment of the present invention may be applied to other mediums such as DVD and CD.

Although the embodiment of the present invention has been described in terms of a lock-in operation with a recording layer farthest from the surface of the optical disk 1 set as a target layer as an example, the embodiment of the present invention may be applied to a focus lock-in operation for a layer other than that layer.

The present invention is not limited to the above-described embodiment and can be carried out in various modes without departing from the sprit and scope of the present invention.

### [Industrial Applicability]

The present invention can be employed for an optical disk apparatus in which a focus lock-in operation is performed for an optical disk including a single recording layer or a plurality of stacked recording layers.

### [Reference Signs List]

- 1: optical disk
- 10: optical pick-up
- 11: laser
- 12: beam splitter
- 13: objective lens
- 14: optical detection section
- 15: focus actuator
- 20: layer determination signal detection section
- 21: lock-in timing detection section
- 22: drive speed switching timing detection section
- 23: focus lock-in speed control section
- 24: focus lock-in perpendicular drive instruction section
- 25: focus drive generation section
- 26: focus error signal detection section
- 27: focus filter
- 28: drive selector
- 29: focus drive section
- 30: light amount signal detection section
- 31: surface detection section
- 100: optical disk apparatus

## Claims

1. An optical disk apparatus for recording/reproducing information on an optical disk including a single recording layer or a plurality of stacked recording layers, the optical disk apparatus comprising:
an objective lens that collects laser light to form an optical spot on the optical disk;
a light amount signal detection section that converts reflected light from a surface and the plurality of recording layers of the optical disk into electrical signals and generates a light amount signal, the light amount signal being a sum of the electrical signals;
a focus error signal detection section that generates a focus error signal, the focus error signal varying depending on a status of collection of the laser light on a recording layer from among the single recording layer or the plurality of stacked recording layers;
a focus drive section that drives a focus actuator for moving the objective lens in a direction perpendicular to the optical disk;
a focus drive generation section that generates a drive signal for moving the objective lens up/down;
a focus filter that generates a drive signal for causing the objective lens to settle at a height position where the focus error signal falls on a zero-crossing in an S-shaped waveform thereof;
a drive selector that switches between a setting for sending the drive signal generated by the focus drive generation section to the focus drive section, and a setting for sending the drive signal generated by the focus filter to the focus drive section; and
a lock-in timing detection section that, upon the light amount signal detected by the light amount signal detection section exceeding a predetermined light amount level, determines that the optical spot reaches a vicinity of any of the single recording layer or the plurality of stacked recording layers recording layers, and sends to the drive selector a focus lock-in timing instruction for switching to the setting for sending the drive signal generated by the focus filter to the focus drive section.

2. The optical disk apparatus according to claim 1, further comprising a surface detection section that, upon the light amount signal detected by the light amount signal detection section exceeding a predetermined light amount level, determines that the optical spot reaches a vicinity of the surface of the optical disk, and conveys information on the detection of the surface of the optical disk to the focus drive generation section,
wherein after insertion of the optical disk, the drive selector selects a setting for sending a drive signal, generated by the focus drive generation section, for lowering the optical spot to a position below the surface of the optical disk and then raising the optical spot to the focus drive section, and upon the surface detection section detecting the surface of the optical disk and conveying information on the detection of the surface of the optical disk to the focus drive generation section,
the focus drive generation section generates a drive signal for searching for a position of a recording layer from among the single recording layer or the plurality of stacked recording layers in a predetermined search amount.

3. The optical disk apparatus according to claim 1, wherein the lock-in timing detection section determines whether or not the optical spot reaches a vicinity of any of the single recording layer or the plurality of stacked recording layers in a downward search.
